Europäisches Patentamt

European Patent Office

Office européen des brevets

(11) Publication number: **0 266 134**

**A1**

## (12) EUROPEAN PATENT APPLICATION

(21) Application number: 87309375.1

(51) Int. Cl.4: **A47J 37/06** , F24C 7/04

(22) Date of filing: 23.10.87

(30) Priority: 29.04.87 GB 8710122
29.10.86 GB 8625888

(43) Date of publication of application:
04.05.88 Bulletin 88/18

(84) Designated Contracting States:
AT BE CH DE ES FR GB GR IT LI LU NL SE

(71) Applicant: THORN EMI Patents Limited
The Quadrangle Westmount Centre Uxbridge Road
Hayes Middlesex UB4 OHB(GB)

(72) Inventor: Tsisios, Michael Nicholas
95 Griva Dhigenis
Paralimni§Famagusta(CY)
Inventor: Smith, Robert David
117, Penton Drive
Cheshunt Herfordshire, EN8 9RU(GB)

(74) Representative: Marsh, Robin Geoffrey et al
Thorn EMI Patents Limited The Quadrangle
Westmount Centre Uxbridge Road
Hayes Middlesex, UB4 0HB(GB)

(54) **Apparatus for grilling or browning food.**

(57) An apparatus for grilling or browning food includes a grilling compartment (1) having a self-contained unit (30) which is mounted in an upper region of the griling compartment (1) during manufacture. Self-contained unit (30) includes one or more infra-red emissive lamps (9,10) which extend from front to rear of grilling compartment. One or more removeable reflectors (34; 32, 33) are provided to reflect radiation from the lamps downwardly into the grilling compartment.

FIG. 5

EP 0 266 134 A1

## APPARATUS FOR GRILLING OR BROWNING FOOD

This invention relates to apparatus for grilling or browning food.

Apparatus of this type is disclosed in copending European Patent Application No. 87305238 wherein, in a preferred embodiment, two tungsten-halogen lamps are mounted in the upper region of a griling compartment. The lamps are separated from the griling area by a glass ceramic screen and a metal mesh, which provides a substantially uniform distribution of intensity of infra-red radiation from the lamps over the grilling area. The mesh can also absorb infra-red radiation from the lamps, which has a peak intensity at approximately 1.2μm, and re-radiate the radiant energy at a wavelength of approximately 3μm or more, which is more suitable for grilling or browning.

However, problems can arise when such an apparatus is required to be standardised for production so that manufacturing costs can be optimised. For example, it may be desirable to be able to accommodate the lamps in a standard grill cavity already employed for accommodating conventional, electrical, resistive, sheathed heating elements, or to be able to mount the lamps easily into both a grill chassis and a microwave oven, which may be of different widths.

It is therefore an object of the present invention to provide apparatus for grilling or browning food, which substantially alleviates the above-mentioned problems.

According to the present invention there is provided apparatus for grilling or browning food, said apparatus including a cavity for accommodating the food and one or more lamps emissive of infra-red radiation for effecting said grilling or browning, said lamps or lamps being mounted in a self-contained unit, said unit being mounted during manufacture in an upper region of said cavity.

Preferably, the lamp or lamps are mounted in said unit so that they extend from front to rear of the cavity.

In this orientation, the lamp or lamps may be electrically connected into a power supply socket provided in the rear region of the cavity.

One or more reflectors are also preferably provided in the unit above the lamp or lamps to reflect infra-red radiation down into the cavity, the reflector or reflectors being removable, preferably by sliding, from the unit for cleaning purposes.

The invention will now be further described by way of example only with reference to the accompanying drawings, wherein:

Figure 1 shows schematically a cross-sectional view of one embodiment,

Figure 2 shows schematically a view along A-A¹ in Figure 1,

Figure 3 shows schematically part of an alternative embodiment,

Figures 4a, b and c show one form of power control of the infra-red-emissive lamps, and

Figures 5 and 6 show part of two further embodiments, respectively.

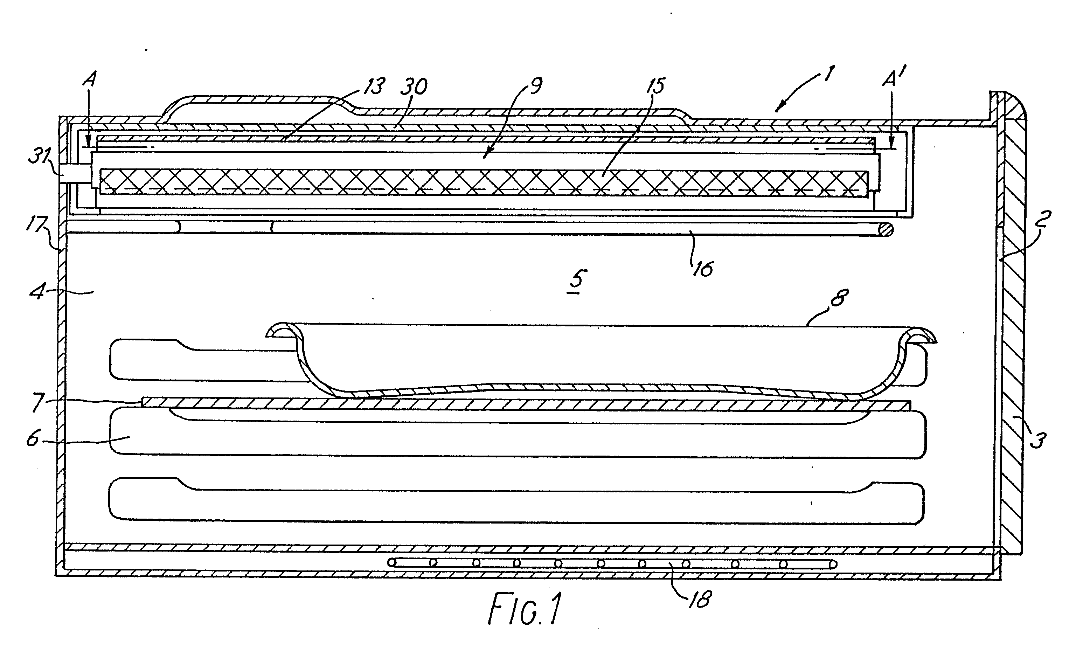

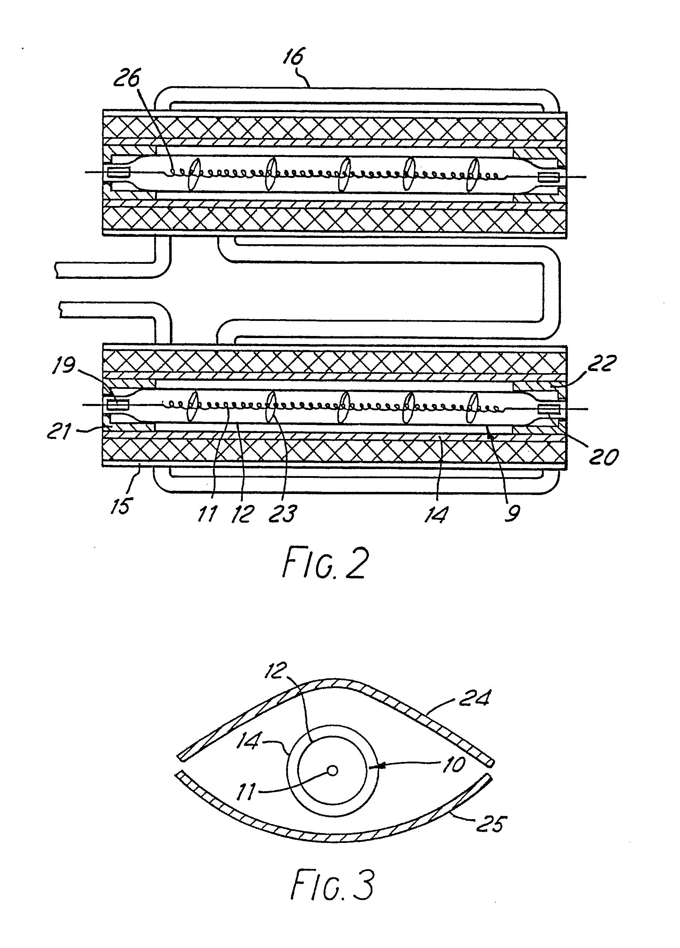

In Figures 1 and 2, a grilling compartment 1 has a front opening 2 closed by a door 3. Side walls 4 of a grilling area 5 are formed with ledges 6 for supporting a shelf 7 at a selectable height within the area 5.

A cooking utensil 8, such as a grill pan, can thus be placed on the shelf 7 in the area 5, to enable food retained in the utensil 8 to be grilled.

Grilling of the food is effected by a number, preferably two, tungsten-halogen lamps 9, 10, emissive of infra-red radiation and each comprising, as shown in Figure 2, a linear or coiled coil tungsten filament 11 supported within a halogenated, tubular quartz envelope 12, which is sealed at each end by a pinch seal.

Behind the lamps 9, 10, a curved reflector 13, preferably formed from chrome-plated steel, is provided to reflect infra-red radiation from the lamps down onto the grilling area.

Each lamp 9, 10 is preferably enclosed within a ruby red quartz tube 14, made for example from Vicor, which acts as an effective light filter without substantially reducing the infra-red emissivity from the lamps.

Each lamp 9, 10, is also provided with a square-shaped trough 15, which extends under the lamp and approximately half-way up each side of the lamp. The trough is preferably formed from a mesh of material, such as an alloy known as Incoloy or any other suitable material, and is preferably formed from an Expamet expanded material. The mesh trough 15 protects the lamps from soiling due to food particles emanating from the grilling area and/or mechanical damage, and also acts as a secondary radiator by absorbing the infra-red radiation from the lamps, which has a peak intensity at a wavelength of approximately 1.2μm, and re-radiating the absorbed energy at a wavelength of 3μm or more, which is more suitable for effecting grilling or browning.

Beneath the mesh trough 15, a conventional electrical sheathed heating element 16 is preferably mounted, in a serpentine configuration, on the rear wall 17 of the compartment. The use of the conventional heating element, in combination with the lamps, provides a more flexible range of power outputs for grilling or browning, and also enables the compartment to be used as a secondary oven employing convection heating with heating element 16 and optionally a second heating element 18 in the base of the compartment.

In Figure 2, it can be seen that the lamps 9, 10 each have pinch seals 19, 20, preferably enclosed within ceramic end caps 21, 22 to protect them. The lamp filament 11 is supported within the envelope 12 by a number of spaced spiral supports 23. Figure 2 also shows the preferred serpentine configuration of the heating element 16.

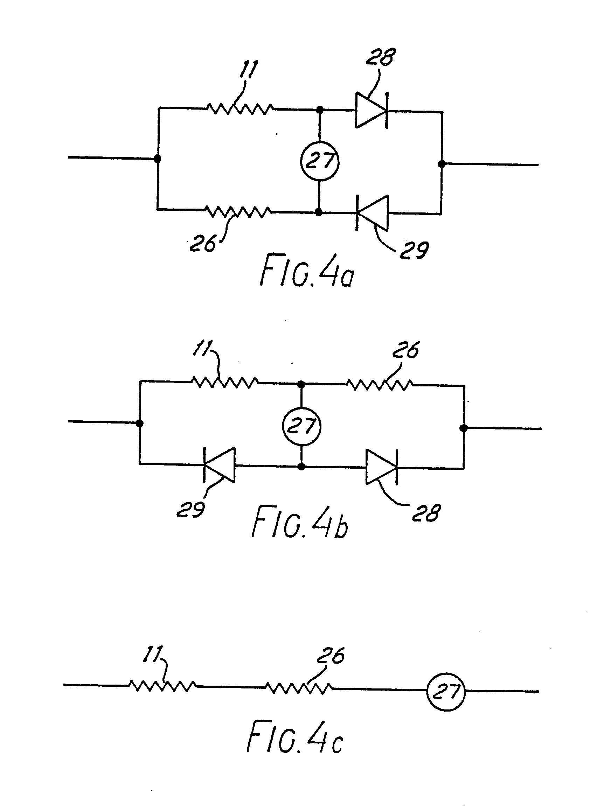

The reflector 13 may be any suitable shape, for example, curved, planar or parabolically shaped around each lamp, as shown at 24 in Figure 3, preferably with the lamp filament 11 at the focus of the parabola. It may also be preferable to shape the mesh trough 15 into a similarly curved configuration below the lamps, as shown at 25 in Figure 3. Alternatively, the reflector 13 could be divided into relatively narow strips (not shown) positioned perpendicular to the lamps. This can be advantageous in inhibiting distortion of the reflector due to thermal expansion.

Although the reflector is preferably made from chrome-plated steel, it could be formed from other metals, such as aluminium, or a reflective ceramic material or any other suitable reflective material.

As another alternative to the mesh trough, the mesh, preferably formed from an expanded material, may be shaped as a tube around each lamp or may just be a plate between the lamps and the grilling area.

The power output of the lamp filaments 11 and 26, as shown in Figures 4a, b and c, may be controlled by a suitable energy regulator 27. In Figure 4a, the energy regulator 27 is connected across filament 11 and a diode 28 and filament 26 and an oppositely directed diode 29, thereby providing an output between 50% and 100% of the maximum power output of the lamps by varying the energy regulator 27. By switching to the arrangement of filaments and diodes shown in Figure 4b, varying the energy regulator 27 can provide an output between 25% and 50% of the maximum lamps output, and with the series arrangement of filaments 11, 26 and regulator 27, shown in Figure 4c, outputs between 0% and 25% of the maximum output can be achieved.

As an alternative to the electromechanical power output control shown in Figure 4a, b and c, an electronic control circuit, such as one of those disclosed in copending European Patent Application No. 86308615.3, preferably including a Gray Code slider or rotary switch, may be utilised.

It may be desirable to direct steam away from the immediate vicinity of the lamps. This may be achieved by employing an air blower, such as a fan, or any other suitable device (not shown).

To standardise production for different widths of grill required, thereby to reduce manufacturing costs, the lamps, and preferably also the reflector, are mounted in a supporting framework, making a self-contained unit, shown in situ at 30 in Figure 1. The unit 30 is preferably constructed so that it can easily be slid or clipped into the upper region of the compartment 1 during manufacture of the grill.

The lamps are preferably orientated within the unit so that, upon insertion into the compartment, they are positioned from front to back of the compartment, as shown in Figure 1 though it will be appreciated that the lamps could alternatively be arranged cross-wise, extending from one side of the component to the opposite side. In this arrangement, the lamps can be electrically connected into a power supply socket 31 in the rear wall of the compartment, which socket 31 could also be used to supply power to the conventional grill heating element 16, either concurrently or as an alternative to the lamps.

If the underside of the unit 30 is left open to the grilling area 5, the interior of the unit will tend to become soiled from the grilling of food. The lamps can be protected from heavy soiling by the mesh trough 15, but it is also important that the reflector 13 can be easily cleaned to maintain the performance of the grill.

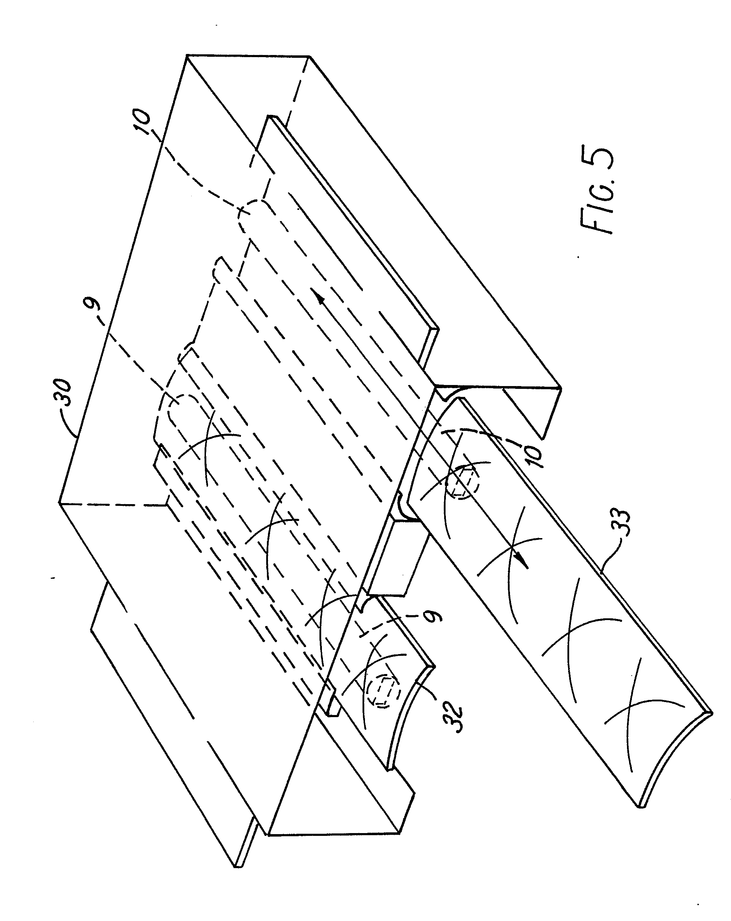

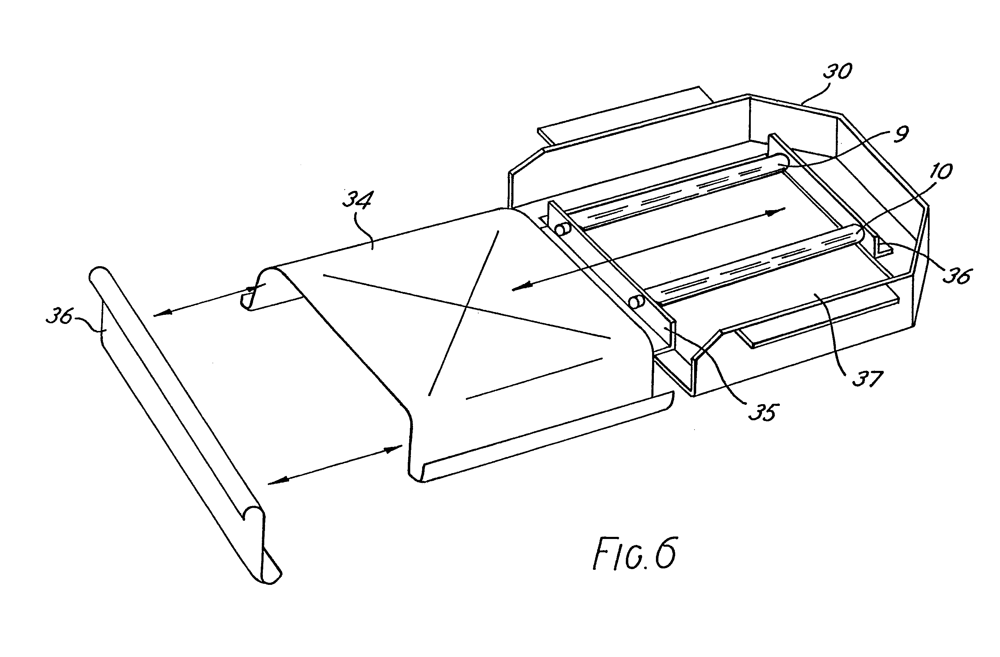

To this end, Figures 5 and 6 show - schematically two embodiments of the self-contained unit 30, which is constructed to be slid during manufacture into the compartment 1, and includes one or more slidably removable reflectors. When the unit 30, shown in either Figures 5 or 6, is mounted in the compartment 1, it is orientated so that the lamps 9, 10 extend from front to rear of the compartment and the reflector(s) can be slid in and out of the unit from the front of the compartment.

Referring to Figure 5, the two lamps 9, 10 each have an individual curved reflector 32, 33, respectively, which can be slid in and out of the front of the unit 30 for cleaning purposes.

The embodiment shown in Figure 6 has a single curved reflector 34, used in association with both lamps 9, 10 which are supported by front and rear brackets 35 and 36 respectively. The reflector 34 can be slid out of the unit 30 for cleaning by removal of a front panel 36, which closes the front of the unit 30, when mounted in the compartment 1.

The embodiments of Figures 5 and 6 have open constructions, there being a central opening 37 to the grilling area beneath lamps 9, 10. However, as an alternative, or in addition, to the removable reflector(s), the unit 30 may be closed beneath the lamps 9, 10 by a glass ceramic screen (not shown), which transmits infra-red radiation emitted by the lamps. The screen is preferably also removable for cleaning purposes.

The grill compartment could also be constructed to receive microwave radiation from a magnetron (not shown) via a suitable waveguide (also not shown), thereby utilising the compartment as a microwave oven, with the lamps being used to brown food cooked by the microwave radiation. Furthermore, a combination of microwave cooking, convective cooking using conventional elements 16, 18 (with or without fan assistance), and grilling or browning using the infra-red lamps can be achieved within a single oven cavity.

In addition to, or instead of, the shelving arrangement shown in Figure 1 in the compartment, a turntable may be provided to effect rotation of the grilling/browning area relative to the lamps.

By mounting the lamps in a self-contained unit, they can easily be accommodated in oven cavities of different dimensions by simple modification to the mounting means. Furthermore, assembly of the apparatus during manufacture is made quicker and easier, and therefore less expensive by the present invention.

Incorporation of the reflector(s) into the unit in a sliding manner is further advantageous to enable easy removal thereof for cleaning purposes.

## Claims

(1) Apparatus for grilling or browning food, said apparatus including a cavity for accommodating the food and one or more lamps emissive of infra-red radiation for effecting said grilling or browning, said lamp or lamps being mounted in a self-contained unit, said unit being mounted during manufacture in an upper region of said cavity.

(2) Apparatus as claimed in claim 1 wherein the lamp or lamps are mounted in said unit so that they extend from front to rear of said cavity.

(3) Apparatus as claimed in claim 2 wherein the lamp or lamps are electrically connected into a power supply socket provided in a rear region of said cavity.

(4) Apparatus as claimed in claim 1, 2 or 3 wherein one or more reflectors are provided in the unit above the lamp or lamps to reflect infra-red radiation emitted by said lamp or lamps down into said cavity, the reflector or reflectors being removable from the unit.

(5) Apparatus as claimed in claim 4 wherein the reflector or reflectors are slidably removable from the unit.

(6) Apparatus as claimed in claim 4 or 5 wherein more than one lamp is provided and each lamp is provided with an individual reflector.

(7) Apparatus as claimed in any preceding claim wherein the or each lamp is provided with a metallic trough located therebelow.

(8) Apparatus as claimed in any preceding claim wherein the or each lamp is shrouded by a light filter.

(9) Apparatus for grilling or browning food, said apparatus being substantially as herein described with reference to the accompanying drawings.

FIG.1

0 266 134

FIG. 2

FIG. 3

FIG.4a

FIG.4b

FIG.4c

FIG. 5

0 266 134

FIG.6

0 266 134

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 348 487 (ZINGG) <br> * Whole document * <br> --- | 1-4 | A 47 J 37/06 <br> F 24 C 7/04 |
| X | CH-A- 222 761 (DELZ) <br> * Whole document * <br> --- | 1 | |
| X | US-A-3 304 406 (KING) <br> * Whole document * <br> --- | 1-4 | |
| X | GB-A-2 152 790 (THORN EMI) <br> * Page 2, lines 2-53; figures 1-4 * <br> --- | 1,4,6,8 | |
| X | FR-E- 4 080 (DUTERTRE) <br> * * Whole document * & FR-A- 317 221 * <br> --- | 1-6 | |
| X | FR-A-1 422 228 (ROTARY) <br> * Whole document * <br> --- | 1,4 | |
| A | FR-A-1 211 831 (SODIR) <br> * Whole document * <br> --- | 1,4,5 | |
| A | CH-A- 377 012 (TURMIX AG) <br> * Page 2, lines 89-120; figures 1,3,4 * <br> ----- | 1,4,7,8 | TECHNICAL FIELDS SEARCHED (Int. Cl.4) <br><br> A 47 J <br> F 24 C <br> H 05 B |

The present search report has been drawn up for all claims

| Place of search | Date of completion of the search | Examiner |
|---|---|---|
| THE HAGUE | 03-02-1988 | SCHARTZ J. |

EPO FORM 1503 03.82 (P0401)